# EUROPEAN PATENT APPLICATION

(11) **EP 4 764 400 A1**
(43) Date of publication of application: **24.06.2026**
(21) Application number: 24221970.7
(22) Date of filing: 19.12.2024
(51) Int. Cl.: G01B 21/08, G01N 21/3563, G01N 25/72

(54) **METHOD FOR THE CONTACTLESS AND NON-DESTRUCTIVE MEASUREMENT OF A COATED SURFACE AND DEVICE THEREFOR**

(71) Applicant: coatmaster AG, 8404 Winterthur (CH)
(72) Inventor: HAURI, Samuel, 8404 Winterthur (CH); LENGWEILER, Oliver Alexander, 8404 Winterthur (CH); REINKE, Nils André, 8404 Winterthur (CH); BARISKA, Andor, 8404 Winterthur (CH)
(74) Representative: E. Blum & Co. AG

(57) **Abstract**

A device for the contactless and non-destructive testing of a surface by measuring its infrared radiation thereof, comprises a plurality of electromagnetic radiation sources each adapted to emit excitation radiation in an excitation beam along an associated radiation axis which can be directed onto the surface to be tested; two or more detectors each arranged on a detection axis directed towards the surface to be tested and receiving, in response to radiation impinging onto the surface to be tested, detection radiation emitted by the surface to be tested. The detected radiation signals (41) from different detectors (20) are synchronized by applying a time shift (40) based on the starting time (42) of the detected radiation signals (41).

## Description

### TECHNICAL FIELD

The present invention relates to a method for the contactless and non-destructive measurement of a coated surface, especially powder- or wet-coated objects by measuring its infrared radiation thereof, comprising: a plurality of electromagnetic radiation sources each adapted to emit excitation radiation in an excitation beam along an associated radiation axis which can be directed onto the surface to be tested; two or more detectors each arranged on a detection axis directed towards the surface to be tested and receiving, in response to radiation impinging onto the surface to be tested, detection radiation emitted by the surface to be tested.

### PRIOR ART

The contactless testing of surfaces based on the generation and measurement of transient periodic heating and cooling processes uses an excitation source for heating the surface to be tested as well as an infrared detector which measures the infrared radiation from the heated surface. This method is called photothermy if electromagnetic radiation in the ultraviolet, optical or infrared range is used for excitation.

US 2006/096677 is related to different temperature measurement and heat-treating methods and systems, especially to measuring heating results on disc shaped wafers from both sides wherein a plurality of electromagnetic radiation sources is provided above and below the wafer. It shows the features of the preamble of claim 1.

A further device is described in US 2013/0037720 using one or more incoherent electromagnetic radiation sources, a detector arranged on a detection axis and comprising a measuring area a testing area defining an area to be measured of the test surface and an imaging device arranged on the detection axis for mapping the testing area onto the measuring area of the detector. The radiation sources are adapted to generate a pulse-like or intensity modulated excitation radiation, e.g., flashlights directed onto the surface to be tested in the testing area.

### SUMMARY OF THE INVENTION

Based on the prior art it is an object of the present invention to improve the measurement of coating thicknesses of different objects. Especially, it is an object of the invention to detect the coating thickness of specific features of coated objects as edges, cavities in the object and corners.

This object is achieved for a method with the features of the preamble of claim 1 by the features of claim 1. The object is achieved for a device with the features of claim 4.

A method for the contactless and non-destructive measurement of a surface by measuring its infrared radiation thereof, comprises the following steps:
At least one electromagnetic radiation source is provided. The radiation source is adapted to emit excitation radiation in an excitation beam along an associated radiation axis which can be directed onto the surface to be measured. The number of electromagnetic radiation source depends on the surface to be measured, especially if the object with the surface is a 3D object where surfaces with different orientations are to be measured.

At least one detector is provided and positioned at a measurement position arranged on a detection axis directed towards the surface to be measured. In response to radiation impinging onto the surface to be measured emitted from the electromagnetic radiation source(s) the detector receives detection radiation emitted by the surface to be measured. The detector(s) comprise a plurality of pixels.

A control unit is provided and connected to the at least one detector and the electromagnetic radiation source(s).

The method defines at least two measurement positions in which a detector receives radiation from the surface to be measured after emission of radiation by the electromagnetic radiation source(s). It is possible that there are different detectors at these measurement positions, or the detector is moved between the measurement positions or the object to be measured is moved to be positioned that a detector is at such a measurement position.

The control unit synchronizes the radiation signals received from the at least two measurement positions for a predetermined pixel of the detector for each of the at least two measurement positions by applying a time shift based on the starting time of the detected radiation signals vis-à-vis emission of radiation by the electromagnetic radiation source to a common point in time.

If all measurement positions are occupied by a separate detector, then all radiation responses from the surface can be detected with one measurement in one positioning step. If only one detector is provided, then all radiation responses from the surface are to be detected in a number of measurements in positioning steps equal to the number of measurement positions. If a limited number of detectors is provided, then it takes a reduced number of measurements in a reduced number of positioning steps, e.g. four detectors at four corners of an object to be measured necessitate two measurements, a first one with four corners and a second one with the remaining four corners.

In the case of more than one measurement, i.e. several positioning steps, then the radiation signals are transmitted to the control unit together with time information from the electromagnetic radiation source(s) related to the emission of radiation in each of the positioning steps.

In a preferred method the control unit synchronizes radiation signals received from the plurality of pixels of each of the detectors by applying a time shift based on the starting time of the detected radiation signals to a common point in time for this detector, which can be the first pixel in the first column and row or it can be a different pixel, especially vis-à-vis the predetermined pixel from the inter-detector synchronization.

A device for the contactless and non-destructive measurement of a surface by measuring its infrared radiation thereof, comprises: one or more electromagnetic radiation sources each adapted to emit excitation radiation in an excitation beam along an associated radiation axis which can be directed onto the surface to be measured, one or more detectors at one or more respective measurement positions arranged on a detection axis directed towards the surface to be measured and, in response to radiation impinging onto the surface to be measured emitted from the electromagnetic radiation source(s), receiving detection radiation emitted by the surface to be measured, and a control unit connected to the detectors and the electromagnetic radiation sources, wherein each of the at least one detector comprise a plurality of pixels. The control unit is configured to position the at least one detector in at least two measurement positions in which a detector is positioned to receive radiation from the surface to be measured after emission of radiation by the electromagnetic radiation source(s), in that the control unit is configured to synchronize the radiation signals received from the at least two measurement positions for a predetermined pixel of the detector for each of the at least two measurement positions by applying a time shift based on the starting time of the detected radiation signals vis-à-vis emission of radiation by the electromagnetic radiation source to a common point in time.

In a preferred embodiment, the control unit is configured to synchronize, for each of the detectors separately, radiation signals received from the plurality of pixels Pij of this detector by applying a time shift based on the starting time of the detected radiation signals to a common point in time for all pixels Pij. These features are able to stand alone and only in connection with a device for the contactless and non-destructive measurement of a surface by measuring its infrared radiation thereof according to the preamble of claim 4.

When the features are realized within a device according to claim 4, then this synchronization can specifically apply vis-à-vis the predetermined pixel from the inter-detector synchronization.

A plurality of detectors and/or electromagnetic radiation sources are positioned in a predetermined distance at the corners, at the edges or over a continuous surface of a coated object along the detection axis. The detectors and electromagnetic radiation sources can be combined into measurement heads.

The observation cones of the detector(s) which are present at two adjacent measurement positions can preferably overlap in an area where a surface to be measured can be positioned. This allows for an improved measurement of these areas which are in a certain distance from the detector and have therefore a lower resolution.

The radiation sources can be provided concentric to the detection axis of an associated detector.

A device can comprise a predetermined number of detectors configured to be positioned around an object to be measured with the observation cones of the detectors oriented in a way that the entire surface of interest of the coated object is in the field of view of at least one of the observation cones. The surface of interest can be the entire surface of an object or a part of it which is e.g. an area to be checked for quality of coating.

The predetermined number of detectors is one or more detectors (20, 21) and they are positioned in a sequence of separate image taking events around the object to be measured to cover, after all image taking events, the entire interesting surface of the object, and wherein in between two image taking events, one or more detectors are moved (7) and/or rotated vis-à-vis the object to be measured.

The predetermined number of detectors is preferably one or more detectors, and in between two image taking events, the object is moved and/or rotated to position the object vis-à-vis the one or more detectors to achieve positioning of the observation cones. After all image taking events have taken place, the entire interesting surface of the coated object was at least once in the field of view of at least one of the observation cones.

Such a device can comprise a plurality of detectors and/or electromagnetic radiation sources, positioned in a predetermined distance at the corners, at the edges and / or over a continuous surface of a coated object along the detection axis.

A device, where the observation cones of two adjacent detectors or the observation cones of one moved detector between two of its subsequent positions or the observation cone of one detector between two subsequent positions of a moved and/or rotated object are overlapping in an area of the surface of the object. The overlapping area seen by more than one detector allows for an improved measurement.

Within a further embodiment of the device, the radiation sources can be provided concentric to the detection axis of an associated detector.

The device may comprise a predetermined number of detectors configured to be positioned around an object to be measured with the observation cones of the detectors oriented in a way that the entire surface of interest of the coated object is in the field of view of at least one of the observation cones. Such a surface of interest can be a specific limited surface of an object. If the entire surface of the coated object is covered, then this is called a solid angle of 4pi.

Such a complete coverage can be achieved when there is only one or more detectors and the one or more detectors are positioned in a sequence of separate image taking events around the object to be measured to cover, after all image taking events, the entire interesting surface of the object, and wherein in between two image taking events, one or more detectors are moved and/or rotated vis-à-vis the object to be measured. This approach reduces the number of necessary detectors at the cost of subsequent image events which means that the measurement is slower and that the lighting conditions with a flashlight have to be defined to ensure that a lighting level above a threshold of illumination is achieved generating a sufficient irradiation response.

A further 4pi approach applies the predetermined number of detectors of one or more detectors, when between two image taking events, the object is moved and/or rotated to position the object vis-à-vis the one or more detectors to achieve positioning of the observation cones with the proviso that, after all image taking events have taken place, the entire interesting surface of the coated object was at least once in the field of view of at least one of the observation cones. Instead of moving the detectors, it is also possible to move and rotate the coated object to be measured.

For all 4pi approaches, since the detectors comprise a plurality of pixels, the control unit is configured to synchronize radiation signals received from the plurality of pixels from different detectors by applying a time shift based on the starting time of the detected radiation signals to a common point in time.

It is an advantage of the invention that a heat map can be provided as result of the measurement. The heat map is a thickness map, reflecting the thickness at the surfaces of interest of the object. Such a thickness map allows for a quick visual check of the quality of a coating which is measured with the method and a device according to an embodiment. Additionally, such visual representations allow the person skilled in the art to detect anomalies in coating and to amend coating parameters to achieve a better result for subsequent coatings.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic perspective view of a plurality of measurement heads with
- Fig. 2: a coated object in the shape of a parallelepiped; shows a schematic perspective view of a plurality of measurement heads with a coated object in the shape of a cylinder;
- Fig. 3: shows a diagram of measured radiation values over time for a plurality of pixels of a measurement head;
- Fig. 4: shows a schema of an array of pixels of a measurement head and related measured values and related time stamps;
- Fig. 5: shows a schematic perspective view of a plurality of measurement heads with a coated object in the shape of a sphere;
- Fig. 6: shows a very schematical detail view of a cross-section of an object with measurement heads, the indication of surface areas of pixels of the measurement heads and the indication of the measured thickness of the coating for these measurement heads;
- Fig. 7: shows a further embodiment of the device for the contactless and non-destructive testing of a surface with an arrangement of less measurement heads and reorientation of the measurement heads and/or object;
- Fig. 8: shows two diagrams of measured radiation values over time for a plurality of pixels at two measurement positions;
- Fig. 9: shows an object to be measured with four measurement heads at four measurement positions; and
- Fig. 10: shows an object to be measured with one measurement head at a specific measurement position, indicating a rotation of the object to move the measurement head to a specific further measurement position.

### DESCRIPTION OF PREFERRED EMBODIMENTS

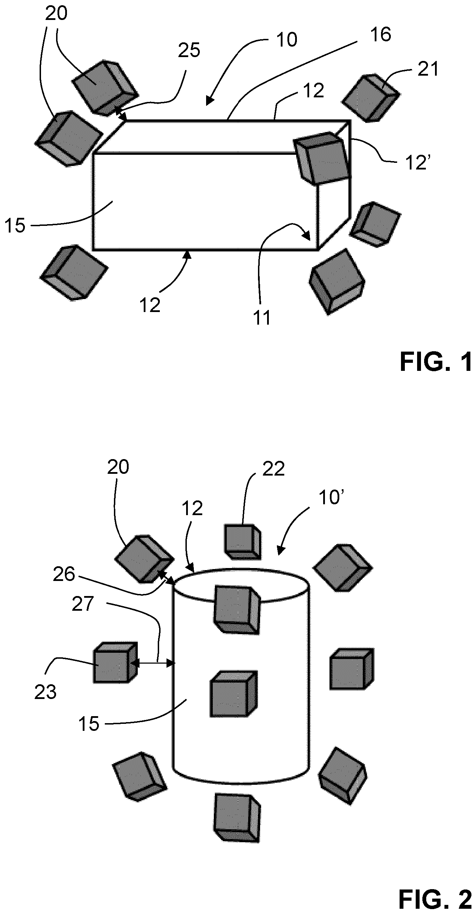

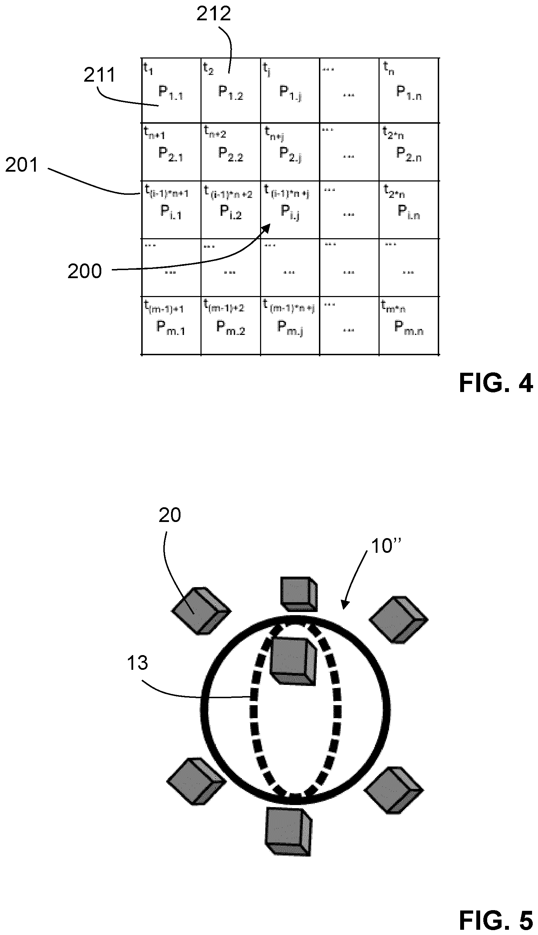

Fig. 1 shows a schematic perspective view of a plurality of measurement heads 20 with a coated object 10 in the shape of a parallelepiped. The shape of the coated object is usually of course not a specific simple geometrical object but comprises features of several different geometrical shapes. In this sense, Fig. 2 shows a schematic perspective view of a plurality of measurement heads 20 with a coated object in the shape of a cylinder 10' and Fig. 5 shows a schematic perspective view of a plurality of measurement heads 20 with a coated object in the shape of a sphere 10". Therefore, reference numeral 10 is used for any object as such, usually having flat or continuous surfaces, edges and corners. Further deviations from simple continuous surfaces can be cavities, recesses and embossments. Actual objects comprise a number and combination of surface features shown in these drawings.

Such coated objects have corners 11 and edges 12 with increased necessities relating to check and ensure a sufficient coating.

Any measurement head 20 comprises at least an irradiation sensor 120 and can comprise an illumination source, especially a flashlight, 220. In further figures, such an illumination source 220 is shown being positioned around the irradiation sensor 120 but other configurations are possible as explained below. A measurement head can have multiple illumination sources or share an illumination source with one or multiple irradiation sensors. In this context, a measurement head 20 can comprise two or more irradiation sensors, e.g. positioned around a central illumination source 220.

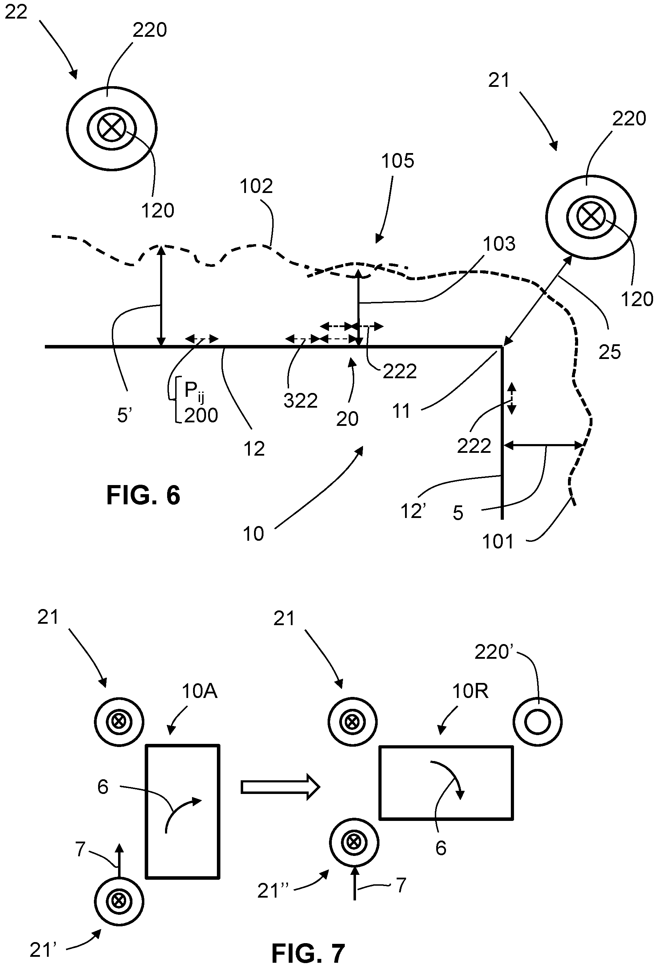

It is preferred to provide a separate IR sensor 120 or only referenced with numeral 20 as part of a measurement head for each corner 11. If the coated object 10 is very long, one or more further IR sensors 20 can be provided and positioned to be oriented towards an edge 12 between the corners depending on the length of the edge. It is of course also possible to reduce the number of sensors 20 through rotating and orientating the object 10 to be checked so that the IR sensors 20 are sequentially checking all corners 11 and edges 12. Additional IR sensors 20 can be positioned over a fixedly presented object for the sequential check. This will be explained in connection with Fig. 7.

Each of the Fig. 1, 2 and 5 to 7 shows the situation of an object to be checked with positioned IR sensors 20 in the moment of illuminating the object and the measurement of the radiation response. The reference numeral 20 is used for indicating IR sensors (optionally with illumination sources) per se, while reference numerals 21, 22 and 23 are used, if a specific position of such an IR-sensor is shown in the drawings.

Each IR sensor 20 has - during the measurement cycle - a detection axis 25, 26 or 27 in connection with measurement heads 21, 22 and 23, respectively, for a corner, an edge and a continuous surface, respectively, around which a detection cone (not shown) exists. The IR sensors 20 "see" the surface of the object by detecting infrared radiation emitted or reflected from different areas of the surface. Each sensor captures this radiation through a lens system that directs the radiation onto an internal pixel array, with each pixel corresponding to a specific area of the object. The field of view of each sensor 20, 120 is determined by the area it can observe, and the resolution of the sensor defines how finely the surface is divided into detectable regions.

To ensure the entire surface of the object is measured, multiple IR sensors 20 are strategically positioned around the object 10. Their fields of view should overlap, allowing for comprehensive coverage. This overlap is especially important for capturing the entirety of critical features like edges and corners. For instance, as seen in Fig. 6 an edge point may be within the detection range of multiple sensors, such as one oriented along the edge and another covering the adjacent surface. Similarly, corner points are observed by sensors oriented toward the adjoining surfaces.

Each IR sensor 20 collects an array of values representing the radiation from its assigned portion of the object's surface. These values are combined to form a complete representation of the infrared radiation across the entire surface. This configuration ensures that every point on the object, from flat surfaces to complex geometries like corners and edges, is within the detection range of at least one sensor, providing accurate and continuous coverage.

In this respect any surface point, e.g., the point 16 in the middle on the edge 12 between two corners 11 is within the detection cone of at least two IR sensors 20, the two corner 11 oriented sensors or one corner 11 oriented sensor and an intermediate edge 12 oriented sensor. The plurality of measurement heads 20 is positioned to cover the entire surface which is to be measured of the coated object with at least one IR sensor 20. In other words, the number of IR sensor heads 20 is chosen that for every point of the entire surface 15 of the coated object there is a measured detection value after irradiation of the object. Although the measurement itself mainly uses the detected irradiation levels after the peak value 44 is reached, it is paramount to start the detection of irradiation before the flashlight is triggered, especially to detect this peak value 44. Such a point is of course not a point in the mathematical sense but a predetermined area around such a mathematical point depending on the resolution of the sensor. This is also correct for edge 12 points and corner 11 points which are in view of a coating being present on these elements having a thickness of coating as rounded areas in a distance of the edge or corner point.

Radiation sources can be provided separately or, e.g., around the IR sensors 20. Similar to the IR sensors the radiation cones of the radiation sources need to cover the complete area that is to be measured and there needs to be an overlap of the radiation cones. This makes sure that the whole measurement area is covered and at the same time increases the irradiation energy of the sections further away from the radiation sources.

Fig. 4 shows a schema of an array of pixels of a measurement head and related measured values and related time stamps. Each IR sensor 20 as a measurement head comprises an array of sensor pixels oriented towards the surface to be inspected. Each square 200, 201, 211, 212 represents a pixel of the IR sensor array 20 and is related to the smallest measurable area portion of an object. Different measurable area portions are not necessarily of the same surface size. The emitted radiation of the object during and after irradiation is detected pixel per pixel with defined measurement intervals per pixel. An IR sensor has a defined frame refresh rate with each frame representing a full array consisting of all pixels from P_{1,1} to P_{m,n}. The start of the measurement interval for pixel P_{i,j} is marked as t_{(i-1)*n+j}. After a frame is completed, the cycle starts again with the first pixel 211.

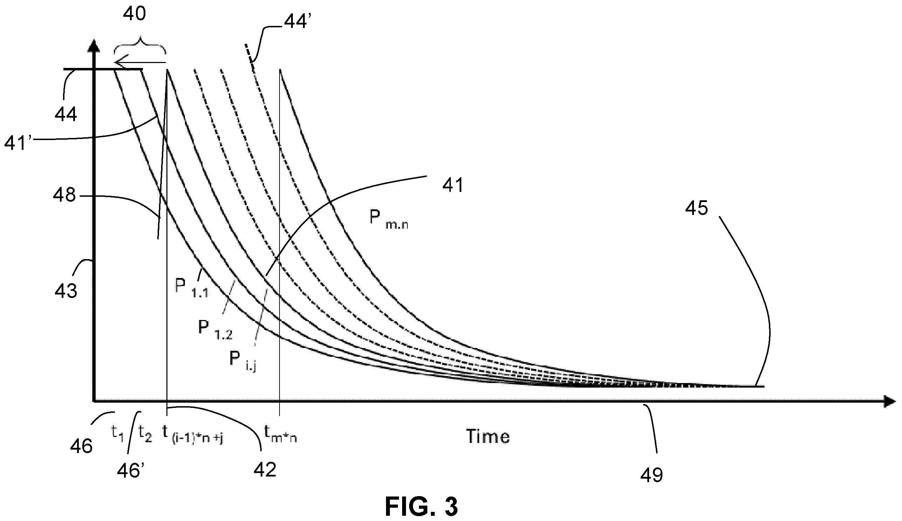

This creates a signal curve over time for each pixel as shown in Fig. 3. The curve 41 represents the values over time for the pixel P_{i,j}.

Fig. 3 shows a diagram of measured values over time for a plurality of such pixels of one measurement head 20. The values of the measurements of such pixel are starting from a high response value (here marked 44) depending on the moment in time when the flashlight illuminates the scenery and then decrease until the end of measurement (marked around 45). The line 41 for pixel Pᵢⱼ is not a continuous curve but consists of discrete values when the irradiation response for a pixel Pᵢⱼ is read out. The lines for different pixels from P₁₁ to Pₘₙ are shifted in time, since the sensors are reads out sequentially. Fig. 3 is not a time synchronized representation of the measurement values for such a measurement head.

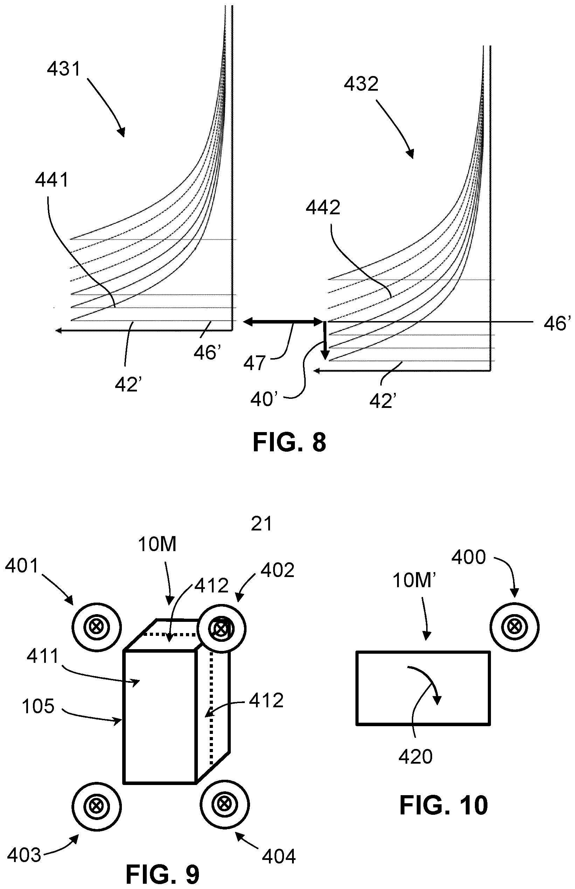

It can be realized that the measurement heads 20, 21, 22 are synchronized that each measurement head is detecting the same pixel, e.g., the first pixel 211 of each array at the same time. It is also possible to synchronize measurement heads with an unequal number of pixels. Then the first pixel of the array is synchronized with all measurement heads and for the remaining of the pixels time compensation is calculated within the measurement server. This will be further explained in connection with Fig. 8 to 10.

The lines 41 for the different pixel P_{i,j} are shown to start at a level 44. Level 44 is not a predetermined threshold; it can be the highest measured value during or after a flashlight which can be different for different pixels; here the measured level 44' is shown to be different for a different pixel. Additionally, there is usually a continuous measurement before this starting point 42 for the pixel Pᵢⱼ whereby the measurement corresponds to an increasing irradiation level 48. This increasing irradiation level happens for all pixels.

As will be explained in connection with Fig. 8 to 10, a synchronized measuring system can use several measuring head positions 20 and only one server as a control unit. In other words, the signals measured by all different measuring heads 20 or the same measuring heads at different measurement positions as explained in connection with Fig. 10 are transferred to the same control unit. The main advantages achieved are increased accuracy due to optimized synchronization and higher brightness due to the overlapping illumination of several measuring heads. The overlapping area 105 as shown in Fig. 6 is seen by more than one measuring head. With the radiation data from one point of the objects captured by at least two measuring heads 20 the system can optimize the evaluation process. Quality of measurement can be further increased by taking overlapping measurements of surfaces with different measuring heads with a calculation or comparison of the measurements of the measuring heads.

Instead of transferring the signals measured by a plurality of measuring heads 20 to the same control unit when an image is taken by illumination at the same time, it is also possible to reduce the number of heads and to re-orient either the measuring heads 20 and/or the object 10 to take additional pictures when the illumination effect as shown by curves 41 in Fig. 3 is gone. This time is marked as end of measurement time 45 in Fig. 3.

By synchronizing the camera frames with the flash of one or more illumination sources, a very accurate overall picture can be obtained and as explained above, the synchronization can happen over several images over time. In this respect, each measurement head 20 receives an irradiation response 41 from the illuminated surface. The irradiation response 41 starts at time 42 for pixel Pij. The starting time 42 is different for different pixel of the same measurement and in case of several measurement heads, it is also different for a pixel "looking" at the same area as shown by the area 105 in Fig. 6 covered by more than one measurement. The control unit applies a specific time shift 40 for each pixel of each measurement head 20 for synchronizing the measurement response. In this respect, Fig. 3 shows the measurement values as they arrive in the control unit before application of the different time shifts, already corrected for the effect of optional reorientation of measurement heads 20 or object 10 over several images as shown in connection with Fig. 7. The triggering of the flash forms the basis for synchronization and is calculated to be the starting point t1 46 for every measuring head 20.

By arranging the measuring heads, detected reflections of the radiation during and after irradiation can be eliminated. This will prevent a false reading when, e.g., for the thickness calculation more dominant radiation is reflected off for the thickness calculation less dominant radiation into the measuring head 20. The above-described overlapping of the detection cones can also eliminate misleading reflections as will be explained in connection with Fig. 6.

It is an aim of the distribution of several measurement heads 20, especially as shown in Fig. 1, 2 and 5, that the coating of an object, as e.g. the coating of a battery cell, can be measured over a large angular range or around the whole part, called 4pi. The use of several measurement heads allows to cover the entire object 10, depending on the holder, in a single measurement, which results in significant time savings. However, the synchronization method allows to use a lower number of measurement heads 20.

In an embodiment of the device, it is possible to measure, depending on the geometry and arrangement of the measuring heads, up to more than 15'000 measuring points per cm2. This allows to cover, with macro optics, an area of less than 0.1 mm per measuring point. Of course, the actual pixel size is independent of measurement result with the synchronization as shown in Fig. 3.

By accurately measuring the coating around the component, it is possible to determine how much coating material (volume) has been applied. This is thus possible without contact and with just one measurement after coating. In this context, "one measurement" is also related to a plurality of images taken after reorientation of measurements heads and object as explained in connection with Fig. 7.

Using just one server and control unit allows to provide one single measurement software applicable with time shifts for all measurement heads 20. Of course, using a single sever also results in a significant cost reduction. It is also possible to centrally read out, control and store system parameters from external systems. This advantage also applies with a sequential taking of images with reoriented measurement heads 20 and object 10.

Fig. 6 shows a very schematical detail view of a cross-section of an object 10 with measurement heads 21 and 22, the indication of associated surface areas 222 and 322 of pixels 200 of these measurement heads 21 and 22, respectively, and the indication of the calculated thickness 5 and 5' of the coating based on measurements for these measurement heads 21 and 22, respectively.

The measurement head 21 on the right comprise a flashlight 220 as illumination source. It has a concentric irradiation sensor 120. The measurement head 21 is positioned with the center of its illumination and observation cone along axis 25 over a corner 11. A second measurement head 22 on the left is positioned over the edge 12 of the object 10 or - in a further embodiment not shown in the drawings - a measurement head 23 on a continuous surface 15 of the object 10 as shown in Fig. 2. The pixels of the left measurement head 22 are observing the areas 322 of the surface, indicated by the arrows in the drawing plane. Each pixel is related to a specific surface area. The pixels of the right measurement head 21 are observing the areas 222 of the surface, indicated by the arrows in the drawing plane.

When an image is taken, the flashlights 220 are synchronized and each pixel area 222 and 322 receives radiation of the associated specific surface area. Each pixel area 222 and 322 is read out a number of times until the end of the measurement period (marked 45 in Fig. 3) and the data over time is transferred to the control unit and can be visualized by the curves 41 in Fig. 3. Since the data is read out sequentially, the control unit is adapted to make said time shift 40 to a common starting point 46. Taken alone for each measurement head 21, the different curves 41 allow to calculate the coating thickness distribution 101 of the coating based on the measurement of the right measurement head 21. The same applies for the calculation of the coating thickness distribution of the coating 102 based on the measurement of the left measurement head 22. For every surface point of the object 10 a thickness of coating 5 or 5' can be established. It is a strength of the present invention that it comprises a measurement overlapping region 105, where both measurement heads 21 and 22 provide results. This is due to the fact that the surface is covered by measured surface areas in pixel areas 222 as well as pixel areas 322. This overlapping area 105 can be much larger or smaller than shown in Fig. 6. It allows for calculating a specific corrected thickness value 103 for each of the points in areas covered by both (or even three or more) measurement heads. The calculated corrected thickness can be used as an additional reference for the complete measurement area of each measuring head involved. This improves the measurement performance in terms of accuracy and precision of the measurements. This is shown as that the length of the double arrows 200, 222 and 322 vary depending on the distance from the associated measurement head.

For this result, synchronization is paramount, on the one hand the synchronization comprises the synchronisation of the starting point of the measurement 46, related to the maximum value of the measured radiation response after a flash, as well as the synchronization of the read-out windows of each pixel Pij.

Fig. 7 shows a further embodiment of the device for the contactless and non-destructive testing of a surface with an arrangement of less measurement heads, here two heads 21 and 21' and reorientation of the measurement heads, here head 21' and/or object 10A to 10R. It is possible to replace simultaneous taking of images around the entire object 10 by taking subsequent images with less measurement heads 21. Here, only two heads 21 and 21' are shown to be positioned over the object 10A at two corners 11. An image with synchronized flashlights is taken and handled as explained above in connection with Fig. 3, 4 and 6. Then the measurement head 21' is moved, here upwards, while the object is rotated from position 10A to 10R. This is a rotation according to arrow 6. The movement of head 21' positions the head in the same predefined and predetermined distance from a different corner of the object. In Fig. 7, measurement head 21 "looks" at the corner, measurement head 21' was positioned initially. Of course, it is possible to reorient the object 10A to a different rotated object which can also be moved laterally, so that every time new corners are examined. The point of Fig. 7 is that it is possible to make images of the surface of an object sequentially and thus reducing the number of cameras and illumination sources. Additional illumination sources 220' can be provided if necessary. Here, illumination source 220' is positioned at the long-distance corner vis-à-vis measurement head 21 and is therefore positioned for object 10R as were the two illumination sources 220 for object 10A associated to the two measurement heads 21 and 21'. In this context, it is favourable to have illumination sources 220 provided independent from the measurement heads 21 and 21'.

With a post-synchronization of the measured irradiation levels due to the knowledge of the common starting level 44 for each pixel and a connected shift 40 for a common starting point 46 the same result as with the eight-head devices of Fig. 1 can be obtained with only one measurement head 20 even when the images are taken sequentially.

Fig. 8 shows two diagrams of measured radiation values over time for a plurality of pixels at two measurement positions 400, 401, 402, 403 or 404 as will be shown in Fig. 9 and 10. The radiation answer of a detector at a first measurement position has received the reference numeral 431 and the radiation answer of a detector at a second measurement position has received the reference numeral 432. The radiation response 431 or 432 are taken by a measurement head 20 and communicated to the control unit. Therefore, the sequence of curves are the same curves as explained in connection with Fig. 3. The synchronisation 47 between the radiation answer 431 and 432 of two measurement positions is achieved with the selection of a common synchronized starting point 46' for a radiation answer 441 of a predetermined pixel at a first measurement position and for a radiation answer 442 of a predetermined pixel at a second measurement position. This synchronisation comprises a shift 40' between the answer of a detector 20 at two measurement positions. With a communication of the time of the flash event, it does not matter if there are two separate detectors at the two measurement positions, or if one detector is moved between the two measurement positions, or if the object is moved to be positioned vis-à-vis the single detector to create the two different measurement positions for this detector.

Fig. 9 shows an object to be measured 10M' with four measurement heads at four measurement positions 401, 402, 403, 404 and Fig. 10 shows an object to be measured 10M' with one measurement head at a specific measurement position 400, indicating a rotation or linear movement or both of the object 10M' for a relative move of the measurement head to a specific further measurement position. Behind the measurement positions 401, 402, 403, 404 there can be separate measurement heads 20 or these positions will be reached through a rotation or displacement as indicated in Fig. 10.

Fig. 9 furthermore shows the coverage of a surface through these four measurement positions 401, 402, 403, 404. The four measurement positions 401, 402, 403, 404 are shown to be in front of the four front corners of the parallelepiped. The detectors at these positions are detecting surfaces 411 and 412 comprising entire surface with edges and corners and a partial surface with partial edges and corner, respectively. In short, these four measurement positions look at the front "half" of the parallelepiped. This is related to an area of edge and the strip is present running over the surface 411 to end in area 412 covered by more than one measurement which is marked with reference numeral 105 as already shown in Fig. 6.

### LIST OF REFERENCE SIGNS

- 5: thickness (by first measurement head)
- 5': thickness (by second measurement head)
- 5": thickness (by combined measurements)
- 6: rotation arrow
- 7: shift arrow
- 10: coated object (parallelepiped)
- 10': coated object (cylindrical object)
- 10": coated object (sphere)
- 10A: coated object at first position
- 10M: coated object (fixedly positioned)
- 10M': coated object (displaced and rotated for measurement)
- 10T: coated object at second position (after rotation)
- 11: corner of coated object
- 12: edge of coated object
- 12': further edge of coated object
- 13: indication of sphere surface of coated sphere
- 15: flat or curved continuous surface
- 16: point on surface, here on edge
- 20: measurement head, optionally with illumination source
- 21: measurement head positioned at a corner
- 22: measurement head positioned at an edge
- 23: measurement head positioned at a continuous or flat surface
- 25: detection axis of sensor (directed towards corner)
- 26: detection axis of sensor (directed towards edge)
- 27: detection axis of sensor (directed towards surface)
- 40: time shift for P_{i,j}
- 40': time shift between two measurement positions
- 41: curve of measured value of radiation for a pixel P_{i,j}
- 41': curve of measured value of radiation a predetermined pixel, e.g. for the first pixel
- 42: starting point of measurement in time for pixel P_{i,j}
- 42': starting time at measurement position
- 43: axis of measured value of radiation
- 44: maximum value of measured radiation response after flash
- 44': higher maximum value for a specific pixel
- 45: end of measurement time
- 46: synchronized starting point in time for one measurement head
- 46': synchronized starting point in time for a specific measurement position
- 47: synchronising of radiation answers
- 49: axis of time
- 101: calculated thickness by first measurement
- 102: calculated thickness by second measurement
- 103: calculated thickness by more than one measurement
- 105: area covered by more than one measurement
- 120: irradiation sensor
- 200: pixel i,j
- 201: time marker for reading the pixel
- 211: first pixel of first line
- 212: second pixel of first line
- 220: flash, illumination source
- 222: pixel area of 21
- 322: pixel area of 22
- 400: fixed single measurement position used for several measurements
- 401: first measurement position
- 402: second measurement position
- 403: third measurement position
- 404: fourth measurement position
- 411: surface of interest (entire surface with edges and corners)
- 412: surface of interest (partial with partial edges and corner)
- 420: displacement of coated object 10M' between measurement positions
- 431: radiation answer of detector at first measurement position
- 432: radiation answer of detector at second measurement position
- 441: radiation answer of a predetermined pixel at first measurement position
- 442: radiation answer of a predetermined pixel at second measurement position

## Claims

1. Method for the contactless and non-destructive measurement of a surface (10, 10', 10", 11, 12, 13, 15; 411, 412) by measuring its infrared radiation thereof, comprising: providing at least one electromagnetic radiation source (220) adapted to emit excitation radiation in an excitation beam along an associated radiation axis which can be directed onto the surface to be measured, providing at least one detector (20, 120) at a measurement position (400; 401, 402, 403, 404) arranged on a detection axis (25, 26, 27) directed towards the surface to be measured (411, 412) and, in response to radiation impinging onto the surface to be measured (411, 412) emitted from the electromagnetic radiation source(s) (220), receiving detection radiation emitted by the surface to be measured (411, 412), and providing a control unit connected to the at least one detector (20, 120) and the electromagnetic radiation source(s) (220),
**characterized in that** each of the at least one detector (20, 120) as provided comprises a plurality of pixels (Pi,j, 200, 201, 211, 212), **in that** the method defines at least two measurement positions (400; 401, 402, 403, 404) in which a detector (20, 120) receives radiation from the surface to be measured (411, 412) after emission of radiation by the electromagnetic radiation source(s) (220), **in that** the control unit synchronizes the radiation signals (41) received from the at least two measurement positions for a predetermined pixel (441, 442) of the detector for each of the at least two measurement positions by applying a time shift (40') based on the starting time (42') of the detected radiation signals vis-à-vis emission of radiation by the electromagnetic radiation source (220) to a common point in time (46').

2. Method according to claim 1, wherein
either detectors (20, 120) are provided at all of the measurement positions (401, 402, 403, 404) around surface(s) (411, 412) of the object (10M) to be measured for a reception of radiation signals (41) in one single positioning step
or one or more detectors (20, 120) are provided at one or more but not at all of the measurement positions (400) around the object (10M') to be measured and wherein the method displaces the object (10M, 10M') to be measured vis-à-vis the detectors (10M) or vice versa in one or more positioning steps to receive radiation signals (41) from the detector(s) sequentially at each of the positioning steps,
wherein the radiation signals (41) are transmitted to the control unit together with time information from the electromagnetic radiation source(s) (220) related to the emission of radiation in each of the positioning steps.

3. Method according to claim 1 or 2, wherein the control unit synchronizes radiation signals (41) received from the plurality of pixels (Pij) of each of the detectors (120) by applying a time shift (40) based on the starting time (42) of the detected radiation signals (41) to a common point in time (46), especially vis-à-vis the predetermined pixel (441 or 442).

4. Device for the contactless and non-destructive measurement of a surface (10, 10', 10", 11, 12, 13, 15) by measuring its infrared radiation thereof, comprising: one or more electromagnetic radiation sources (220) each adapted to emit excitation radiation in an excitation beam along an associated radiation axis which can be directed onto the surface to be measured, one or more detectors (20, 120) at one or more respective measurement positions (400; 401, 402, 403, 404) arranged on a detection axis (25, 26, 27) directed towards the surface to be measured (411, 412) and, in response to radiation impinging onto the surface to be measured (411, 412) emitted from the electromagnetic radiation source(s) (220), receiving detection radiation emitted by the surface to be measured (411, 412), and a control unit connected to the detectors (20, 120) and the electromagnetic radiation sources (220), wherein each of the at least one detector (20, 120) comprise a plurality of pixels (Pi,j, 200, 201, 211, 212),
**characterized in that** the control unit is configured to position the at least one detector (20, 120) in at least two measurement positions (400; 401, 402, 403, 404) in which a detector (20, 120) is positioned to receive radiation from the surface to be measured (411, 412) after emission of radiation by the electromagnetic radiation source(s) (220), **in that** the control unit is configured to synchronize the radiation signals (41) received from the at least two measurement positions for a predetermined pixel (441, 442) of the detector for each of the at least two measurement positions by applying a time shift (40') based on the starting time (42') of the detected radiation signals vis-à-vis emission of radiation by the electromagnetic radiation source (220) to a common point in time (46').

5. Device for the contactless and non-destructive measurement of a surface (10, 10', 10", 11, 12, 13, 15) by measuring its infrared radiation thereof according to the preamble of claim 4 or according to claim 4, **characterized in that** the control unit is configured to synchronize, for each of the detectors (20, 120) separately, radiation signals (41) received from the plurality of pixels (Pij) of this detector (20, 120) by applying a time shift (40) based on the starting time (42) of the detected radiation signals (41) to a common point in time (46) for all pixels (Pij), especially vis-à-vis the predetermined pixel (441 or 442).

6. Device according to claim 4 or 5, wherein a plurality of detectors (20, 120) and/or electromagnetic radiation sources (220) are positioned in a predetermined distance at the corners (11), at the edges (12) or over a continuous surface (13, 15) of a coated object along the detection axis.

7. Device according to any one of claims 4 to 6, wherein the observation cones of the detector(s) (20, 120) at two adjacent measurement positions (400; 401, 402, 403, 404) are overlapping in an area where a surface to be measured can be positioned.

8. Device according to any one of claims 4 to 7, wherein the radiation sources (220) are provided concentric to the detection axis of an associated detector (120).

9. Device according to any one of claims 4 to 8, wherein the device comprises a predetermined number of detectors (20, 120) configured to be positioned around an object (10) to be measured with the observation cones of the detectors (20, 120) oriented in a way that the entire interesting surface of the coated object (10) is in the field of view of at least one of the observation cones.

10. Device according to claim 9, wherein the predetermined number of detectors (20, 120) is one or more detectors (20, 21) and the one or more detectors (20, 120) are positioned in a sequence of separate image taking events around the object (10A, 10R) to be measured to cover, after all image taking events, the entire interesting surface of the object (10), and wherein in between two image taking events, one or more detectors (21', 21") are moved (7) and/or rotated vis-à-vis the object (10R) to be measured.

11. Device according to claim 9, wherein the predetermined number of detectors (20, 120) is one or more detectors (20, 21), and wherein in between two image taking events, the object (10A to 10R) is moved and/or rotated to position the object (10R) vis-à-vis the one or more detectors (21") to achieve positioning of the observation cones, that, after all image taking events have taken place, the entire interesting surface of the coated object (10) was at least once in the field of view of at least one of the observation cones.
